# EUROPÄISCHE PATENTSCHRIFT

(11) **EP 3 466 730 B1**
(45) Veröffentlichungstag und Bekanntmachung des Hinweises auf die Patenterteilung: **02.12.2020**
(21) Anmeldenummer: 17195196.5
(22) Anmeldetag: 06.10.2017
(51) Int. Cl.: B60D 5/00, B61D 17/22

(54) **ÜBERGANG FÜR EIN SCHIENENFAHRZEUG**
TRANSITION FOR A RAIL VEHICLE
RACCORDEMENT POUR UN VÉHICULE FERROVIAIRE

(43) Veröffentlichungstag der Anmeldung: 10.04.2019
(73) Patentinhaber: Hübner GmbH & Co. KG, 34123 Kassel (DE)
(72) Erfinder: Martynenko, Jürgen, 34246 Vellmar (DE); Frieser, Stephan, 34123 Kassel (DE); Staszak, Przemyslaw, 34253 Lohfelden (DE); Nebel, Christian, 34346 Hann. Münden (DE)
(74) Vertreter: Patentanwälte Walther Hinz Bayer PartGmbB

(56) Entgegenhaltungen:
- EP-A1- 2 322 363
- EP-A1- 2 607 114
- EP-A1- 3 028 883

## Beschreibung

Die Erfindung betrifft einen Übergang für ein Schienenfahrzeug zur Anordnung zwischen zwei beweglich miteinander verbundenen Fahrzeugteilen des Schienenfahrzeugs, mit einem Wellenbalg, aufweisend mehrere Balgwellen und mit einem Abdeckelement zur Abdeckung eines Bereiches eines Wellenbalges, wobei das Abdeckelement Abdeckwellen aufweist, die an die Balgwellen des Wellenbalges angepasst und mit diesem in Überdeckung gebracht sind.

### STAND DER TECHNIK

Beispielsweise offenbart die EP 1 602 546 B1 einen Übergang für ein Schienenfahrzeug zur Anordnung zwischen zwei beweglich miteinander verbundenen Fahrzeugteilen, und es ist ein Abdeckelement in Form einer Bodenabdeckung offenbart, das innenseitig am Wellenbalg befestigt ist. Eine solche Bodenabdeckung dient zum Abdecken eines Spaltes zwischen dem Wellenbalg und einem Bodenelement zeichnet sich durch einen ebenfalls balgartigen Aufbau aus, wobei die Bodenabdeckung etwa 40 cm bis 50 cm über dem Boden an dem eigentlichen Wellenbalg des Übergangs befestigt ist. Die Befestigung erfolgt durch ein Halterungselement in Form eines Bleches, wobei das Halterungselement an dem Balgrahmen des Wellenbalges befestigt ist und nach innen hineinragt, sodass die Befestigung der Bodenabdeckung möglich wird. Die Befestigung von Anbauteilen erfolgt vorzugsweise an den Balgrahmen, da diese eine tragende Funktion haben. Die Befestigung von Anbauteilen auf der Innenseite eines Negativ-Wellenbalgs, bei dem die Balgrahmen auf der Außenseite des Balges angeordnet sind, ist daher besonders problematisch.

Die Befestigung zwischen der Bodenabdeckung und dem Wellenbalg erfolgt durch Schraubelemente, welche jedoch aufgrund der abdeckenden Eigenschaften der Bodenabdeckung nur erschwert erreichbar sind. Die Montage des Abdeckelementes erschwert sich auch dadurch, dass die Befestigung mit Schraubelementen für jede einzelne Abdeckwelle an den Halteblechen erfolgen muss, sodass die Montage sehr aufwendig ist und diese eine Vielzahl von Einzelteilen erfordert. Wünschenswert wäre daher eine Vereinfachung der Anordnung eines Abdeckelementes am Wellenbalg eines Übergangs.

Die Befestigung des Abdeckelementes am Wellenbalg muss jedoch auch so erfolgen, dass höhere Kräfte übertragen werden können, die deutlich über die Kräfte hinausgehen, die durch das Eigengewicht des Wellenbalges und die Bewegungskräfte entstehen. Beispielsweise muss gewährleistet sein, dass dann, wenn sich Personen auf den Wellenbalg setzen, dieser in der Form und Lage stabil bleibt, insbesondere darf der Wellenbalg nicht auf einem Bodenelement des Übergangs zur Anlage gelangen.

Weist das Abdeckelement Profilelemente zur Aussteifung auf, muss zudem darauf geachtet werden, dass diese nicht zu lang ausgeführt werden, sodass bei einer äußeren Krafteinwirkung auf das Abdeckelement die Profilelemente den Wellenbalg des Übergangs nicht beschädigen. Darüber hinaus ist es wünschenswert, die Profilelemente gerade auszubilden, sodass diese nicht durch Biegeverfahren bearbeitet werden müssen und sodass sich eine einfache Herstellung des Abdeckelementes ergibt.

Ein weiterer Aspekt bei der Befestigung des Abdeckelementes ist ein Schutz gegen eine Manipulation, eine unberechtigte Demontage, eine mutwillige Zerstörung oder auch ein Schutz gegen das Einwerfen von Gegenständen in einen Spalt beispielsweise zwischen dem Wellenbalg und dem Abdeckelement. Wichtig ist dabei jedoch gleichermaßen die Möglichkeit einer zerstörungsfreien Demontage, damit die Bodenabdeckung gesondert vom Wellenbalg abgenommen und beispielsweise ausgetauscht werden kann oder um an Bauteile zu gelangen, die sich hinter dem Abdeckelement befinden. Dabei soll insbesondere der Wellenbalg unbeschädigt bleiben und auch zur Befestigung notwendige Befestigungselemente sollten für eine erneute Montage weiterverwendbar sein. Folglich sollte insbesondere auf die Verwendung von Nahtverbindungen verzichtet werden. Das Dokument EP 2 322 363 A1 offenbart einen Übergang gemäß dem Oberbegriff des Anspruchs 1.

### OFFENBARUNG DER ERFINDUNG

Aufgabe der Erfindung ist die Weiterbildung eines Übergangs mit einem Abdeckelement, das eine verbesserte Anordnung am Wellenbalg aufweist.

Diese Aufgabe wird ausgehend von einem Übergang gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die Lehre ein, dass das Abdeckelement am Wellenbalg werkzeug- und zerstörungsfrei abnehmbar befestigt ist.

Eine werkzeugfreie, abnehmbare Befestigung im Sinne der Erfindung ist so ausgestaltet, dass die Befestigung manuell hergestellt und wieder gelöst werden kann. Die Herstellung der Befestigung und das Lösen derselben erfolgt ohne externes Werkzeug, sodass ein Bediener allein durch die Anwendung entsprechender Handgriffe die Abdeckwellen und insbesondere die Profilelemente des Abdeckelementes vom Wellenbalg lösen kann.

Ein weiterer Vorteil zur Befestigung des Abdeckelementes wird erreicht, wenn die seitlichen Abschlüsse des Abdeckelementes mit Seitenleisten gebildet sind, die in einer Weise am Fahrzeug oder an einem weiteren Umbauteil befestigt sind, von dem eine unberechtigte Person die Seitenleiste nicht ohne Weiteres lösen kann. Insbesondere kann ein unberechtigtes Lösen des Abdeckelements verhindert werden, wenn die Seitenleisten nur mit einem speziellen Werkzeug gelöst werden können. Damit kann eine unberechtigte Person auch nicht an die erfindungsgemäße Befestigung des Abdeckelementes am Wellenbalg gelangen und dieses lösen.

Insbesondere kann zu Wartungszwecken und/oder zum Zwecke des Austausches des Abdeckelementes ein Bediener das Abdeckelement abnehmen, ohne hierzu weiteres Werkzeug zu benötigen. Das Abdeckelement weist selber ebenfalls Abdeckwellen auf, die mit den Balgwellen des Wellenbalges so in Übereinstimmung gebracht werden, dass die Wellenbäuche der Abdeckwellen des Abdeckelementes mit den Wellenbäuchen der Balgwellen des Balges in Überdeckung gelangen.

Mit besonderem Vorteil bildet das Abdeckelement eine Bodenabdeckung zur Abdeckung eines Spaltes zwischen dem Wellenbalg und einem Bodenelement des Übergangs. Alternativ kann das Abdeckelement auch beispielsweise als Dachabdeckung innerhalb des Übergangs eingesetzt werden.

Ein wesentlicher Aspekt der Erfindung ist die Ausgestaltung der Verbindung zwischen dem Abdeckelement und dem Wellenbalg, um die Befestigung des Wellenbalges herzustellen. Dabei ist es von Vorteil, wenn die Befestigung zwischen dem Abdeckelement und dem Wellenbalg Sicherungselemente, vorzugsweise Klippverbindungselemente aufweist. Die Klippverbindungselemente umfassen einen elastisch verformbaren zungenähnlichen Abschnitt, der mit einer entsprechenden schlitz- oder lochartigen Gegengeometrie in Eingriff gebracht werden kann, wenn die Klippverbindungselemente geschlossen werden. Durch manuelles Auseinanderziehen von dem Klippelement und der Gegengeometrie kann diese wieder gelöst werden, wobei das Lösen unter Überwindung einer Mindest-Lösekraft erfolgt. Dadurch wird sichergestellt, dass die Klippverbindungselemente das Abdeckelement sicher an dem Wellenbalg halten, jedoch trotzdem manuell gelöst werden können. Die Löserichtung zur Trennung der Klippverbindungselemente von der Gegengeometrie erfolgt quer zur flächigen Erstreckung des Abdeckelementes, sodass das Abdeckelement durch eine unberechtigte Person nicht ohne Weiteres vom Wellenbalg abgezogen werden kann. Vielmehr muss zunächst eine Seitenleiste, ggf. unter Zuhilfenahme eines Werkzeugs, gelöst werden, um die Klippverbindungselemente zugänglich zu machen, und diese können erst dann einzeln und insbesondere nacheinander folgend getrennt werden.

Als weiteren Vorteil weist die Befestigung zwischen dem Abdeckelement und dem Wellenbalg Druckknöpfe auf. Diese sind insbesondere als Ergänzung zu den Klippverbindungselementen vorgesehen, insbesondere, um einen oberen Stoffabschnitt der Abdeckwellen des Abdeckelementes an die Balgwellen des Wellenbalges anzudrücken.

Mit weiterem Vorteil weist der Wellenbalg zwischen den Balgwellen angeordnete Balgrahmen auf, wobei an den Balgrahmen zur Innenseite des Übergangs hin ragende Haltebleche angeordnet sind, an denen das Abdeckelement angeordnet ist. Die Haltebleche können mit den Balgrahmen beispielsweise verpresst oder vercrimpt werden, sodass die Haltebleche lamellenartig zwischen den Balgwellen des Wellenbalges nach innen in den Übergang hineinragen. Die Länge der Haltebleche ist so bestimmt, dass die an den Endseiten der Haltebleche angebrachten Klippverbindungselemente gut zugänglich sind.

Weiterhin weist das Abdeckelement mit Vorteil Profilelemente auf, wobei an den Profilelementen Haltebleche angeordnet sind, die mittels der Klippverbindungselemente mit den Halteblechen an den Balgrahmen verbunden sind. Wird das Abdeckelement an den Wellenbalg angeordnet, so stehen sich die Haltebleche an den Profilelementen des Abdeckelementes den Halteblechen an dem Wellenbalg gegenüber, sodass die Klippverbindungselemente bequem von Hand eingerastet werden können.

Mit weiterem Vorteil weist der Wellenbalg zwischen den Balgwellen angeordnete Balgrahmen auf, wobei an den Balgrahmen weiterhin Haltelaschen angeordnet sind, die ebenfalls zur Innenseite des Übergangs hin ragen, und an den Haltelaschen, die beispielsweise aus Balgstoff hergestellt sein können, können Mittel zur lösbaren Verbindung, beispielsweise Druckknöpfe, angeordnet sein, mit denen das Abdeckelement mit den Haltelaschen verbindbar ist. Die Druckknöpfe können beispielsweise so ausgeführt sein, wie diese bekannt sind für die Befestigung von Abdecküberzügen, für die Befestigung einer Persenning an einem Fahrzeug oder dergleichen.

Die Anordnung der Klippverbindungselemente und der Druckknöpfe ist so vorgesehen, dass die Verbindung der beiden sich gegenüberstehenden Haltebleche mittels der Klippverbindungselemente eine untere Befestigung und mittels der Druckknöpfe eine obere Befestigung des Abdeckelementes an dem Wellenbalg bilden. Mit besonderem Vorteil sind die beiden sich gegenüberstehenden Haltebleche mittels jeweils zwei übereinanderstehenden Klippverbindungselementen zur Erzeugung einer Stabilität des Abdeckelementes befestigt, während die Befestigung mit den Druckknöpfen einen oberen Spaltschluss bewirkt. Im Bereich der oberen Anbindung besteht die Aufgabe darin, dass sowohl eine dichte und hintergriffsichere Anbindung erfolgt, während jedoch die Bewegungsfreiheit des Wellenbalges durch das Abdeckelement, insbesondere durch die starren Profilelemente des Abdeckelements nicht behindert werden darf. Die Balgwellen des Abdeckelements weisen daher einen oberen Stoffabschnitt auf, der sich an die Wellen des Wellenbalgs anlegt und nicht von Profilelementen des Abdeckelements gehalten wird. Zur Vermeidung eines unberechtigten Hintergreifens des Abdeckelementes in Anordnung an dem Wellenbalg sollen auch diese Stoffabschnitte fest an den Balgwellen anliegen. Hierzu dienen die Druckknöpfe, die von der Außenseite des am Wellenbalg angeordneten Abdeckelementes nicht ohne Weiteres zugänglich sind, da auch zur Lösung der Druckknöpfe zunächst Seitenleisten des Abdeckelementes gelöst werden müssen, um die Druckknöpfe zu bedienen. Mit den oberseitigen Druckknöpfen wird folglich eine im Wesentlichen dichte, hintergriffsichere Anordnung der Abdeckwellen des Abdeckelementes an den Balgwellen des Wellenbalges geschaffen.

Gemäß einer alternativen Ausgestaltung der Anordnung des Abdeckelementes ist vorgesehen, dass dieses auf einer Unterseite sich aus den Abdeckwellen fortsetzende flächenförmige Abschnitte aufweist, die an den Wellenbalg werkzeugfrei abnehmbar befestigt sind. Der Wellenbalg weist dabei zwischen den Balgwellen angeordnete Balgrahmen auf, wobei an den Balgrahmen zur Innenseite des Übergangs hin ragende Haltebleche mit einer Hinterschnittkontur angeordnet sind, an denen die flächenförmigen Abschnitte eingehakt sind. Durch eine solche Anordnung kann die Befestigung des Abdeckelementes am Wellenbalg auch ohne Klippverbindungselemente und ggf. ohne Druckknöpfe erfolgen, in dem in den flächenförmigen Abschnitten des Abdeckelementes abgenähte Taschen gebildet sind, wobei bei einem Anordnen des Abdeckelementes an dem Wellenbalg die Hinterschnittkontur der Haltebleche, die am Wellenbalg befestigt sind, in die abgenähten Taschen an den flächenförmigen Abschnitten eingesetzt sind, die wiederum am Abdeckelement ausgebildet sind.

Beispielsweise können die abgenähten Taschen so ausgebildet sein, dass das Abdeckelement durch sein Eigengewicht am Wellenbalg halten kann. Die Hinterschnittkontur und die abgenähten Taschen sind dabei so geformt, dass das Abdeckelement mit einer Vertikalbewegung von oben nach unten am Wellenbalg befestigt werden kann und mit einer Vertikalbewegung von unten nach oben vom Wellenbalg wieder gelöst werden kann. Dabei erfolgt das Befestigen und das Lösen des Abdeckelementes an und von dem Wellenbalg ebenfalls werkzeugfrei, insbesondere ohne die Verwendung von Zubehörteilen wie Schrauben oder dergleichen.

Mit weiterem Vorteil sind die flächenförmigen Abschnitte mit den Abdeckwellen einteilig ausgebildet, sodass das Abdeckelement ausschließlich aus einer Anzahl von miteinander vernähten Wellenflächenkörpern gebildet ist. Folglich weisen die Wellenflächenkörper mehrere Nahtabschnitte auf, um diese miteinander zu verbinden und die Abdeckwellen zu bilden, und zugleich setzen sich die Stoffbahnen der Abdeckwellen in die flächenförmigen Abschnitte fort, sodass für jede einzelne Welle des Abdeckelementes Wellenflächenkörper gebildet sind.

Im Ergebnis wird mit der erfindungsgemäßen Ausführung des Übergangs erreicht, dass das Abdeckelement ohne Verwendung von Werkzeug manuell befestigbar und auch wieder abnehmbar ist, wobei die Befestigung der Seitenleisten, die den seitlichen Randabschluss des Abdeckelementes bilden, verdeckt sein können oder diese können nur mit einem Werkzeug gelöst werden, insbesondere von den Stirnseiten der Fahrzeugteile. Weiterhin weist das Abdeckelement einen einfachen Aufbau auf, und die Befestigung am Wellenbalg ist mechanisch hoch belastbar, sodass auch eine äußere Krafteinwirkung das Abdeckelement nicht beschädigt und dieses in der Anordnung am Wellenbalg nicht wesentlich verändert. Ein weiterer Vorteil ist eine erhöhte Sicherheit gegen Sabotage, da mit der Verwendung der Druckknöpfe das Abdeckelement nicht ohne Weiteres vom Wellenbalg gelöst werden kann. Insbesondere auch die seitliche Verschlussrichtung der Klippverbindungselemente verhindert ein unberechtigtes Abziehen des Abdeckelementes vom Wellenbalg.

### BEVORZUGTES AUSFÜHRUNGSBEISPIEL DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: eine perspektivische Ansicht eines Übergangs mit einem Wellenbalg und einem Abdeckelement, das ausgeführt ist als eine Bodenabdeckung,
- Fig. 2: das Abdeckelement gemäß Fig. 1 in Anordnung am Wellenbalg in einer vergrößerten Ansicht,
- Fig. 3: eine Detailansicht von Bestandteilen des Abdeckelementes in Anordnung am Wellenbalg,
- Fig. 4: ein alternatives Ausführungsbeispiel eines Abdeckelementes in Anordnung an Halteblechen in einer Seitenansicht und
- Fig. 5: das Ausführungsbeispiel des Abdeckelementes in Anordnung an den Halteblechen in einer perspektivischen Ansicht.

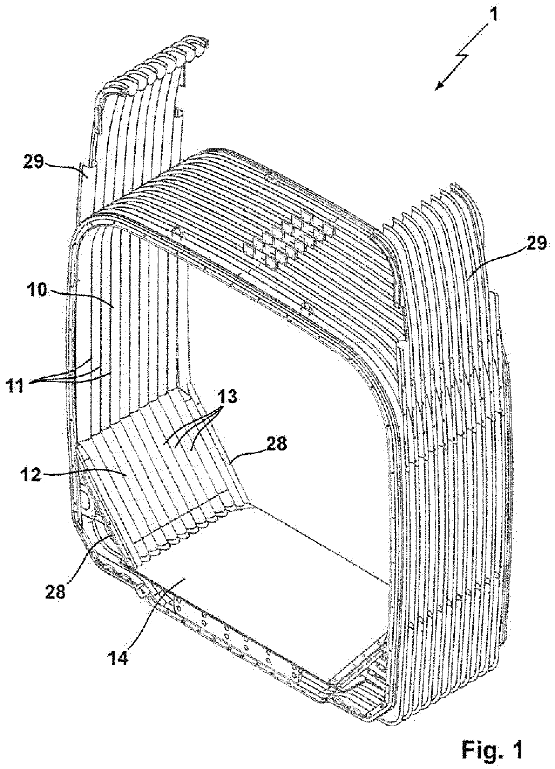

In Fig. 1 ist ein Übergang 1 für ein Schienenfahrzeug zur Anordnung zwischen zwei beweglich miteinander verbundenen Fahrzeugteilen des Schienenfahrzeugs gezeigt, wobei der Übergang 1 reduziert dargestellt ist, und es ist ein Wellenbalg 10 gezeigt, durch den innenseitig ein begehbarer Durchgang zwischen den ebenfalls nicht gezeigten Fahrzeugteilen gebildet ist.

Auf der Unterseite weist der Übergang 1 ein Bodenelement 14 auf, welches begehbar ist. Zur Spaltabdeckung zwischen dem Wellenbalg 10 und dem Bodenelement 14 dient ein Abdeckelement 12, welches in den unteren Ecken, jedoch noch oberhalb des Bodenelementes 14, am Wellenbalg 10 befestigt wird. Das Abdeckelement 12 ist durch die bodenseitige Anordnung als Bodenabdeckung zu bezeichnen, jedoch kann auf gleiche Weise auch eine Kopfabdeckung erzeugt werden, die einen Spalt zwischen dem Wellenbalg und einem Dachelement abdecken kann.

Der Wellenbalg 10 weist eine Vielzahl von Balgwellen 11 auf, die mit ihren Wellenbäuchen nach innen in den Übergang 1 hinein ragen. Das Abdeckelement 12 weist Abdeckwellen 13 auf, die ebenfalls in den Innenbereich des Übergangs 1 hineinragen, und seitlich sind die Abdeckwellen 13 innen mit Seitenleisten 28 begrenzt. Außenseitig weist der Übergang 1 eine Kopfabdeckung 29 auf, die wenigstens in den vertikalen Seitenbereichen den Wellenbalg 10 umschließt.

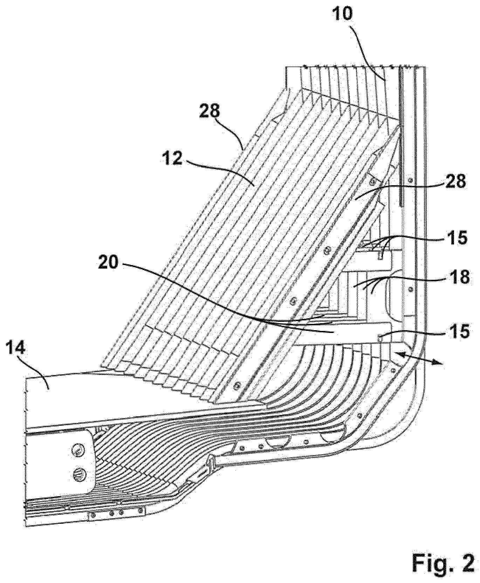

Fig. 2 zeigt eine vergrößerte Ansicht der Anordnung des Abdeckelementes 12 innenseitig am Wellenbalg 10, und das etwa diagonal eingesetzte Abdeckelement 12 endet unterseitig mit einem geringen Abstand über der Oberfläche des Bodenelementes 14, und oberseitig greifen einzelne Abdeckwellen 13 des Abdeckelementes 12 in die Balgwellen 11 des Wellenbalges 10 ein. Das Abdeckelement 12 ist vorderseitig und rückseitig mit Seitenleisten 28 versehen, die an Stirnwänden des Fahrzeugs oder Mittelrahmen eines Übergangs befestigt werden können, die jedoch in der Ansicht nicht näher gezeigt sind.

Rückseitig sind am Abdeckelement 12 Haltebleche 20 angeordnet, die mit Halteblechen 18 verbunden sind, wobei letztere am Wellenbalg 10 befestigt sind. Die Haltebleche 18 sind dabei mit den Halteblechen 20 mittels Klippverbindungselementen 15 befestigt.

Soll das Abdeckelement 12 vom Wellenbalg 10 entnommen werden, muss zunächst auf einer Seite eine Seitenleiste 28 gelöst werden, insbesondere mit einem Werkzeug, um eine Manipulation zu verhindern. Wird die Seitenleiste 28 nach oben umgeschlagen, so werden die ersten Haltebleche 18, 20 frei zugänglich, und die Klippverbindungselemente 15 können, wie mit dem Doppelpfeil gezeigt, durch eine seitliche Bewegung voneinander getrennt werden, sodass das erste Halteblech 18 vom ersten Halteblech 20 getrennt wird. Die mit dem ersten Halteblech 20 verbundene erste Balgwelle 1 kann gemeinsam mit der Seitenleiste 28 wiederum umgeschlagen werden, um an die weiteren dahinter liegenden Haltebleche 18 zu gelangen, die mit den Halteblechen 20 über die weiteren Klippverbindungselemente 15 verbunden sind. Durch ein fortschreitendes Umklappen der Abdeckwellen 13 können Haltebleche 18, 20 für Haltebleche 18, 20 sukzessive freigelegt werden, bis das gesamte Abdeckelement 12 schließlich vom Wellenbalg 10 entnommen werden kann.

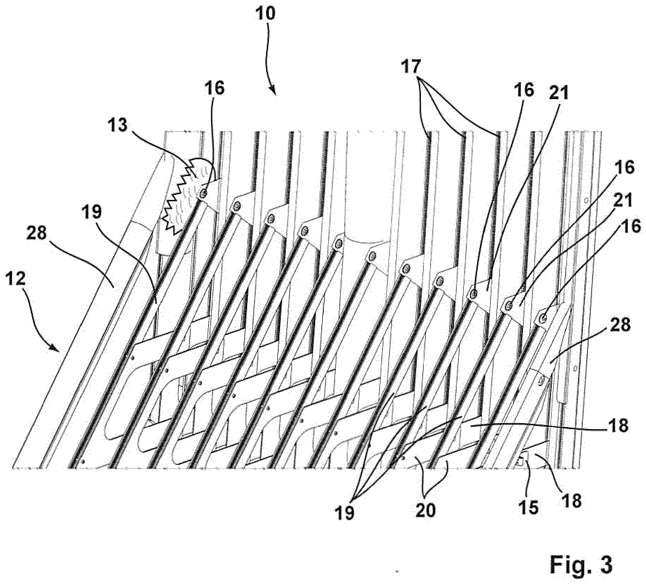

Die Haltebleche 18, 20 sind jeweils mit zwei Klippverbindungselementen 15 miteinander befestigt, die in der Vertikalen übereinanderliegend angeordnet sind. Eine weitere Befestigung mittels Druckknöpfen zeigt die folgende Fig. 3.

In Fig. 3 ist der Wellenbalg 10 des Übergangs ohne Balgwellen dargestellt, sodass Balgrahmen 17 sichtbar werden, die die nicht dargestellten Balgwellen des Wellenbalges miteinander verbinden. An den Balgrahmen 17 sind unterseitig die Haltebleche 18 angeordnet, die über die Klippverbindungselemente 15 mit den Halteblechen 20 verbunden werden. Das Abdeckelement 12, das ebenfalls ohne die Abdeckwellen dargestellt ist, weist Profilelemente 19 auf, an denen die Haltebleche 20 befestigt sind. Oberseitig sind Druckknöpfe 16, die in nicht näher gezeigter Weise an den Abdeckwellen 13 angebracht sind, mittels Haltelaschen 21 an den Balgrahmen 17 des Wellenbalges 10 angebunden. Die Druckknöpfe 16 können ebenfalls manuell und damit auf einfache Weise ohne Werkzeug gelöst werden, sofern zunächst die erste Seitenleiste 28 gelöst und umgeklappt wurde.

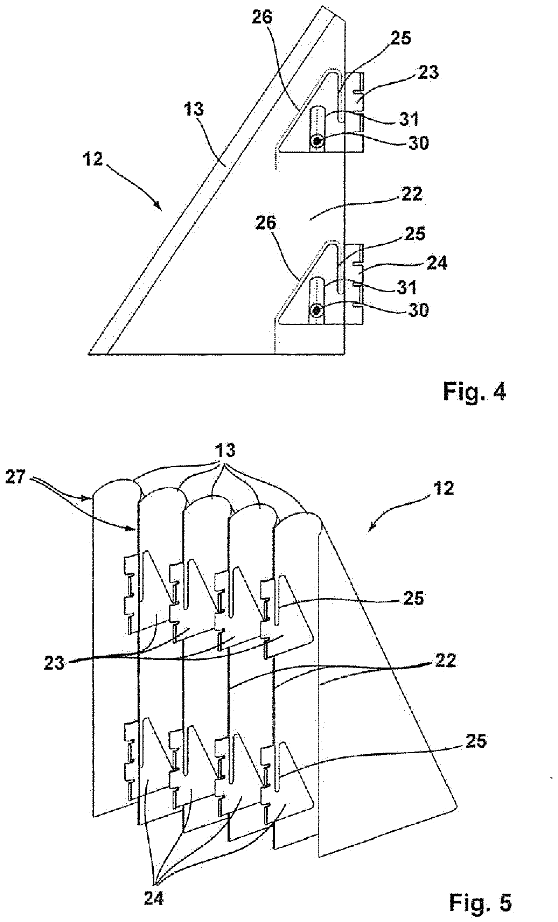

Schließlich zeigen die Figuren 4 und 5 ein weiteres Ausführungsbeispiel zur Anordnung eines Abdeckelementes 12 an einen nicht näher dargestellten Wellenbalg. Das Abdeckelement 12 weist auf der Rückseite sich aus den Abdeckwellen 13 fortsetzende flächenförmige Abschnitte 22 auf, die an den Wellenbalg werkzeugfrei abnehmbar befestigt werden können. Dabei sind Haltebleche 23 und 24 gezeigt, die in nicht näher dargestellter Weise am Wellenbalg befestigt sind, z. B. durch Vercrimpen oder Verklemmen an den Balgrahmen des Wellenbalgs. Die oberseitigen Haltebleche 23 und die unterseitigen Haltebleche 24 sind im montierten Zustand in abgenähte Taschen 26 eingelassen, wobei die abgenähten Taschen 26 als Abnäher in den flächenförmigen Abschnitten 22 mittels entsprechend verlaufender Nähte ausgeführt sind. Sind die Haltebleche 23 und 24 starr am Wellenbalg angeordnet, so kann das Abdeckelement 12 in gewisser Weise von Abdeckwelle 13 zu Abdeckwelle 13 an den Halteblechen 23, 24 befestigt werden, indem eine Hinterschnittkontur 25 der Haltebleche 23, 24 in die abgenähten Taschen 2 eingesetzt wird. Hierzu kann das Abdeckelement 12 in einer Vertikalbewegung von oben nach unten bewegt werden, nachdem das Abdeckelement 12 an den Wellenbalg heran gedrückt wurde.

Soll das Abdeckelement 12 vom Wellenbalg entnommen werden, so muss jede einzelne Abdeckwelle 13 mit einer Vertikalbewegung nach oben von den Halteblechen 23, 24 gelöst werden, bis die Hinterschnittkontur 25 aus den abgenähten Taschen 26 entnommen ist, sodass die entsprechende Abdeckwelle 13 umgeschlagen werden kann, um die dahinterliegende nächste Abdeckwelle 13 auf gleiche Weise zu lösen. Sind alle Abdeckwellen 13 mit den flächenförmigen Abschnitten 22 von den Halteblechen 23, 24 gelöst, kann das Abdeckelement 12 vollständig entnommen werden.

Das Ausführungsbeispiel zeigt einen einfachen Aufbau des Abdeckelementes 12, das aus einer Vielzahl von Wellenflächenkörpern 27 gebildet ist, die mittels Nähten zu einem einteiligen Abdeckelement 12 miteinander verbunden sind. Dabei gehen die flächenförmigen Abschnitte 22 in die Abdeckwellen 13 einteilig über und bilden die jeweiligen Wellenflächenkörper 27.

Zur weiteren Sicherung des Abdeckelements 12 an den Halteblechen 23, 24 können zusätzliche Sicherungselemente 30 vorgesehen sein, die das Herauslösen der Haltebleche 23, 24 aus den Taschen 26 verhindern.

Die Sicherungselemente 30 können in der Art an dem Abdeckelement 12 und an den Halteblechen 23, 24 angeordnet sein, dass sich eine Höhenverstellbarkeit des Abdeckelements 12 gegenüber den Halteblechen 23, 24 ergibt, beispielsweise durch Anordnung von Langlöchern 31 am Abdeckelement 12 und/oder an den Haltblechen 23, 24.

Um einen möglichen Verschleiß zwischen den Halteblechen 23, 24 und dem Abdeckelement 12 im Bereich der Taschen 26 zu verhindern und/oder um die Reibung in diesem Bereich zu erhöhen, kann ein zusätzliches Material, z. B. in der Form eines Elastomers, in die Tasche 26 und/oder auf die Haltebleche 23, 24 aufgebracht werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können in den verschiedensten Kombinationen erfindungswesentlich sein. Beispielsweise ist es denkbar, dass das Abdeckelement 12 gemäß dem Ausführungsbeispiel in Fig. 4 und 5 weiterhin Druckknöpfe 16 aufweist, um die oberen Stoffabschnitte der Abdeckwellen 13 fest an den Balgwellen 11 des Wellenbalges 10 zu fixieren.

### Bezugszeichenliste:

- 1: Übergang

- 10: Wellenbalg
- 11: Balgwellen
- 12: Abdeckelement
- 13: Abdeckwellen
- 14: Bodenelement
- 15: Klippverbindungselement
- 16: Druckknopf
- 17: Balgrahmen
- 18: Halteblech
- 19: Profilelement
- 20: Halteblech
- 21: Haltelasche
- 22: flächenförmiger Abschnitt
- 23: Halteblech
- 24: Halteblech
- 25: Hinterschnittkontur
- 26: abgenähte Tasche
- 27: Wellenflächenkörper
- 28: Seitenleiste
- 29: Kopfabdeckung
- 30: Sicherungselement
- 31: Langloch

## Patentansprüche

1. Übergang (1) für ein Schienenfahrzeug zur Anordnung zwischen zwei beweglich miteinander verbundenen Fahrzeugteilen des Schienenfahrzeugs, mit einem Wellenbalg (10) aufweisend mehrere Balgwellen (11) und mit einem Abdeckelement (12) zur Abdeckung eines Bereiches des Wellenbalges (10), wobei das Abdeckelement (12) Abdeckwellen (13) aufweist, die an die Balgwellen (11) des Wellenbalges (10) angepasst und mit diesen in Überdeckung gebracht sind,
**dadurch gekennzeichnet,**
**dass** das Abdeckelement (12) am Wellenbalg (10) werkzeugfrei abnehmbar befestigt ist, indem
a) die Befestigung zwischen dem Abdeckelement (12) und dem Wellenbalg (10) Klippverbindungselemente (15) und/oder Druckknöpfe (16) aufweist oder dass
b) das Abdeckelement (12) auf einer Unterseite sich aus den Abdeckwellen (13) fortsetzende flächenförmige Abschnitte (22) aufweist, die an den Wellenbalg (10) werkzeugfrei abnehmbar befestigt sind, indem der Wellenbalg (10) zwischen den Balgwellen (11) angeordnete Balgrahmen (17) aufweist, wobei an den Balgrahmen (17) zur Innenseite des Übergangs (1) hin ragende Haltebleche (23, 24) mit einer Hinterschnittkontur (25) angeordnet sind, an denen die flächenförmigen Abschnitte (22) eingehakt sind.

2. Übergang (1) nach Anspruch 1,
**dadurch gekennzeichnet,**
**dass** das Abdeckelement (12) eine Bodenabdeckung zur Abdeckung eines Spaltes zwischen dem Wellenbalg (10) und einem Bodenelement (14) ist.

3. Übergang (1) nach einem der Ansprüche 1 oder 2,
**dadurch gekennzeichnet,**
**dass** das Abdeckelement (12) Stoffabschnitte aufweist, die nicht von einem Profilelement (19) des Abdeckelementes (12) gehalten sind, wobei in mindestens einem dieser Stoffabschnitte Mittel zur lösbaren Befestigung, insbesondere mittels eines Druckknopfes (16), zwischen Abdeckelement (12) und Wellenbalg (10) angeordnet ist.

4. Übergang (1) nach einem der vorgenannten Ansprüche,
**dadurch gekennzeichnet,**
**dass** der Wellenbalg (10) zwischen den Balgwellen (11) angeordnete Balgrahmen (17) aufweist, wobei an den Balgrahmen (17) zur Innenseite des Übergangs (1) hin ragende Haltebleche (18) angeordnet sind, an denen das Abdeckelement (12) angeordnet ist.

5. Übergang (1) nach einem der vorgenannten Ansprüche,
**dadurch gekennzeichnet,**
**dass** das Abdeckelement (12) Profilelemente (19) aufweist, wobei an den Profilelementen (19) Haltebleche (20) angeordnet sind, die mittels der Sicherungselemente (30) bzw. der Klippverbindungselemente (15) mit den Halteblechen (18) an den Balgrahmen (17) verbunden sind.

6. Übergang (1) nach einem der vorgenannten Ansprüche,
**dadurch gekennzeichnet,**
**dass** der Wellenbalg (10) zwischen den Balgwellen (11) angeordnete Balgrahmen (17) aufweist, wobei an den Balgrahmen (17) zur Innenseite des Übergangs (1) hin ragende Haltelaschen (21) angeordnet sind, an denen die Druckknöpfe (16) angeordnet sind und mit denen das Abdeckelement (12) mit den Haltelaschen (21) verbindbar ist.

7. Übergang (1) nach einem der vorgenannten Ansprüche,
**dadurch gekennzeichnet,**
**dass** die Verbindung der beiden sich gegenüberstehenden Haltebleche (18, 20) mittels der Sicherungselemente (30) bzw. der Klippverbindungselemente (15) eine untere Befestigung und die Druckknöpfe (16) an den Haltelaschen (21) eine obere Befestigung des Abdeckelementes (12) an den Wellenbalg (10) bilden.

8. Übergang (1) nach einem der vorgenannten Ansprüche,
**dadurch gekennzeichnet,**
**dass** die beiden sich gegenüberstehenden Haltebleche (18, 20) mittels jeweils mindestens einem Sicherungselement (30) bzw. einem Klippverbindungselement (15) zur Erzeugung einer Stabilität des Abdeckelementes (12) befestigt sind, während die Befestigung mit den Druckknöpfen (16) einen oberen Spaltschluss bewirkt.

9. Übergang (1) nach Anspruch 1,
**dadurch gekennzeichnet,**
**dass** in den flächenförmigen Abschnitten (22) abgenähte Taschen (26) gebildet sind, wobei bei einem Anordnen des Abdeckelementes (12) an dem Wellenbalg (10) die Hinterschnittkontur (25) der Haltebleche (23, 24) in die abgenähten Taschen (26) eingesetzt sind.

10. Übergang (1) nach Anspruch 9,
**dadurch gekennzeichnet,**
**dass** die Hinterschnittkontur (25) und die abgenähten Taschen (26) so ausgebildet sind, dass das Abdeckelement (12) mit einer Vertikalbewegung von oben nach unten am Wellenbalg (10) befestigbar ist und mit einer Vertikalbewegung von unten nach oben vom Wellenbalg (10) lösbar ist.

11. Übergang (1) nach einem der Ansprüche 1, 9 oder 10,
**dadurch gekennzeichnet,**
**dass** die flächenförmigen Abschnitte (22) mit den Abdeckwellen (13) einteilig ausgebildet sind, sodass das Abdeckelement (12) ausschließlich aus einer Anzahl von miteinander vernähten Wellenflächenkörpern (27) gebildet ist.

12. Übergang (1) nach einem der vorgenannten Ansprüche,
**dadurch gekennzeichnet,**
**dass** das Abdeckelement (12) seitliche Abschlüsse mit Seitenleisten (28) aufweist, die am Fahrzeug oder an einem weiteren Umbauteil befestigt sind und die ein unberechtigtes Lösen des Abdeckelements (12) verhindern.

## Claims

1. A transition (1) for a rail vehicle for arrangement between two vehicle parts that are movable with one another, having a gangway bellows (10) comprising a plurality of folds (11) and having a cover element (12) for covering a region of the gangway bellows (10), wherein the cover element (12) has cover folds (13) that are adapted to the folds (11) of the gangway bellows (10) and are brought into superposition therewith,
**characterized in that**
the cover element (12) is fastened to the gangway bellows (10) in a manner removable without tools, **in that**
a) the fastening between the cover element (12) and the gangway bellows (10) comprises clip connection elements (15) and/or press fastenings (16); or **in that**
b) the cover element (12) has laminary portions (22) on its lower side that continue from the cover folds (13) and that are fastened to the gangway bellows(10) in a manner removable without tools **in that** the gangway bellows (10) has bellows frames (17) arranged between the folds (11), with metal retaining plates (23, 24) projecting toward the inside of the transition (1) and having an undercut contour (25) at which the laminary portions (22) are hooked being arranged at the bellows frame (17).

2. A transition (1) in accordance with claim 1,
**characterized in that**
the cover element (12) is a floor covering for covering a gap between the gangway bellows (10) and a floor element (14).

3. A transition (1) in accordance with claim 1 or claim 2,
**characterized in that**
the cover element (12) has fabric sections that are not held by a profile element (19) of the cover element (12), with means for a releasable fastening, in particular by means of a press fastening (16), being arranged between the cover element (12) and the gangway bellows (10) in at least one of these fabric sections.

4. A transition (1) in accordance with one of the preceding claims,
**characterized in that**
the gangway bellows (10) has bellows frames (17) arranged between the folds (11), with metal retaining plates (18) at which the cover element (12) is arranged being arranged at the bellows frames (17) and projecting toward the inner side of the transition (1)

5. A transition (1) in accordance with one of the preceding claims,
**characterized in that**
the cover element (12) has profile elements (19), with metal retaining plates (20) that are connected to the metal retaining plates (18) at the bellows frames (17) by means of the securing elements (30) or the clip connection elements (15) being arranged at the profile elements (19).

6. A transition (1) in accordance with one of the preceding claims,
**characterized in that**
the gangway bellows (10) has bellows frames (17) arranged between the folds (11), with retaining lugs (21) at which the press fastenings (16) are arranged and by which the cover element (12) is connectable to the retaining lugs (21) being arranged at the bellows frames (17) and projecting toward the inner side of the transition (1).

7. A transition (1) in accordance with one of the preceding claims,
**characterized in that**
the connection of the two oppositely disposed metal retaining plates (18, 20) form a lower fastening and the press fastenings (16) at the retaining lugs (21) form an upper fastening of the cover element (12) at the gangway bellows (10) by means of the securing elements (30) or the clip connection elements (15).

8. A transition (1) in accordance with one of the preceding claims,
**characterized in that**
the two oppositely disposed metal retaining plates (18, 20) are fastened by means of respectively at least one securing element (30) or a clip connection element (15) to produce stability of the cover element (12), while the fastening with the press fastenings (16) effecting an upper gap closure.

9. A transition (1) in accordance with claim 1,
**characterized in that**
stitched pockets (26) are formed in the laminary portions (22), with the undercut contour (25) of the metal retaining plates (23, 24) being inserted into the stitched pockets (26) on an arrangement of the cover element (12) at the gangway bellows (10).

10. A transition (1) in accordance with claim 9,
**characterized in that**
the undercut contour (25) and the stitched pockets (26) are configured such that the cover element (12) is fastenable to the gangway bellows (10) by a vertical movement from the top to the bottom and being releasable from the gangway bellows (10) by a vertical movement from the bottom to the top.

11. A transition (1) in accordance with one of the claims 1, 9, or 10,
**characterized in that**
the laminary portions (22) are formed in one part with the cover folds (13) so that the cover element (12) is formed exclusively from a number of fold surface members (27).

12. A transition (1) in accordance with one of the preceding claims,
**characterized in that**
the cover element (12) has lateral terminations with side moldings (28) that are fastened to the vehicle or to a further modification part and that prevent an unauthorized release of the cover element (12).

## Revendications

1. Raccordement (1) pour un véhicule ferroviaire destiné à être agencé entre deux parties de véhicule reliées l'une à l'autre de manière mobile du véhicule ferroviaire, comprenant un soufflet d'intercirculation (10) comportant plusieurs ondulations de soufflet (11) et comprenant un élément de recouvrement (12) pour recouvrir une zone du soufflet d'intercirculation (10), l'élément de recouvrement (12) comportant des ondulations de recouvrement (13), qui sont adaptées aux ondulations de soufflet (11) du soufflet d'intercirculation (10) et qui sont amenées en chevauchement avec celles-ci,
**caractérisé en ce que**
l'élément de recouvrement (12) est fixé au soufflet d'intercirculation (10) de manière amovible sans outil, du fait que
a) la fixation entre l'élément de recouvrement (12) et le soufflet d'intercirculation (10) comporte des éléments de liaison à clip (15) et/ou des boutons pressions (16) ou que
b) l'élément de recouvrement (12) comporte, sur une face inférieure, des portions planes (22) se prolongeant depuis les ondulations de recouvrement (13), qui sont fixées au soufflet d'intercirculation (10) de manière amovible sans outil, du fait que le soufflet d'intercirculation (10) comporte des cadres de soufflet (17) disposés entre les ondulations de soufflet (11), des tôles de retenue (23, 24) dotées d'un profil en contre-dépouille (25), qui dépassent vers le côté intérieur du raccordement (1), étant disposées sur les cadres de soufflet (17), les portions planes (22) étant accrochées auxdites tôles de retenue.

2. Raccordement (1) selon la revendication 1,
**caractérisé en ce que**
l'élément de recouvrement (12) est un recouvrement de plancher pour recouvrir une fente entre le soufflet d'intercirculation (10) et un élément de plancher (14).

3. Raccordement (1) selon l'une des revendications 1 ou 2,
**caractérisé en ce que**
l'élément de recouvrement (12) comporte des portions de matière qui ne sont pas retenues par un élément profilé (19) de l'élément de recouvrement (12), des moyens de fixation amovibles, en particulier au moyen d'un bouton pression (16), étant disposés dans au moins une de ces portions de matière, entre l'élément de recouvrement (12) et le soufflet d'intercirculation (10).

4. Raccordement (1) selon l'une des revendications précédentes,
**caractérisé en ce que**
le soufflet d'intercirculation (10) comporte des cadres de soufflet (17) disposés entre les ondulations de soufflet (11), des tôles de retenue (18), qui dépassent vers le côté intérieur du raccordement (1), étant disposées sur les cadres de soufflet (17), l'élément de recouvrement (12) étant disposé sur lesdites tôles de retenue.

5. Raccordement (1) selon l'une des revendications précédentes,
**caractérisé en ce que**
l'élément de recouvrement (12) comporte des éléments profilés (19), des tôles de retenue (20) étant disposées sur les éléments profilés (19), lesquelles sont reliées aux tôles de retenue (18) des cadres de soufflet (17) au moyen des éléments de blocage (30) ou des éléments de liaison à clip (15).

6. Raccordement (1) selon l'une des revendications précédentes,
**caractérisé en ce que**
le soufflet d'intercirculation (10) comporte des cadres de soufflet (17) disposés entre les ondulations de soufflet (11), des pattes de retenue (21), qui dépassent vers le côté intérieur du raccordement (1), étant disposées sur les cadres de soufflet (17), les boutons pressions (16) étant disposés sur lesdites pattes de retenue, au moyen desquels l'élément de recouvrement (12) peut être relié aux pattes de retenue (21).

7. Raccordement (1) selon l'une des revendications précédentes,
**caractérisé en ce que**
la liaison des deux tôles de retenue (18, 20) se faisant face au moyen des éléments de blocage (30) ou des éléments de liaison à clip (15) forme une fixation inférieure et les boutons pressions (16) sur les pattes de retenue (21) forment une fixation supérieure de l'élément de recouvrement (12) au soufflet d'intercirculation (10).

8. Raccordement (1) selon l'une des revendications précédentes,
**caractérisé en ce que**
les deux tôles de retenue (18, 20) se faisant face sont fixées respectivement au moyen d'au moins un élément de blocage (30) ou un élément de liaison à clip (15) pour obtenir une stabilité de l'élément de recouvrement (12), pendant que la fixation avec les boutons pressions (16) permet une fermeture de fente supérieure.

9. Raccordement (1) selon la revendication 1,
**caractérisé en ce que**
des poches cousues (26) sont formées dans les portions planes (22), le profil en contre-dépouille (25) des tôles de retenue (23, 24) étant inséré dans les poches cousues (26) lors du placement de l'élément de recouvrement (12) sur le soufflet d'intercirculation (10).

10. Raccordement (1) selon la revendication 9,
**caractérisé en ce que**
le profil en contre-dépouille (25) et les poches cousues (26) sont réalisés de telle sorte que l'élément de recouvrement (12) peut être fixé au soufflet d'intercirculation (10) par un mouvement vertical de haut en bas et peut être détaché du soufflet d'intercirculation (10) par un mouvement vertical de bas en haut.

11. Raccordement (1) selon l'une des revendications 1, 9 ou 10,
**caractérisé en ce que**
les portions planes (22) sont réalisées d'un seul tenant avec les ondulations de recouvrement (13), de telle sorte que l'élément de recouvrement (12) est formé uniquement par un certain nombre de corps de surface d'ondulation (27) cousus les uns aux autres.

12. Raccordement (1) selon l'une des revendications précédentes,
**caractérisé en ce que**
l'élément de recouvrement (12) comporte des bordures latérales dotées de barres latérales (28), qui sont fixées au véhicule ou à une autre pièce de transformation et qui empêchent un détachement non autorisé de l'élément de recouvrement (12).
